(19)

Europäisches
Patentamt
European
Patent Office
Office européen
des brevets

(11) **EP 2 237 560 A1**

(12) **EUROPEAN PATENT APPLICATION**

(43) Date of publication:
06.10.2010 Bulletin 2010/40

(51) Int Cl.:
$H04N\ 7/26^{(2006.01)}$     $H04N\ 7/46^{(2006.01)}$
$H04N\ 7/01^{(2006.01)}$

(21) Application number: 10156800.4

(22) Date of filing: 17.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 30.03.2009 TR 200902468

(71) Applicant: Vestel Elektronik Sanayi ve Ticaret A.S.
45030 Manisa (TR)

(72) Inventors:
• Özkalayci, Burak Oguz
45030, Manisa (TR)
• Bastug, Ahmet
45030, Manisa (TR)

(74) Representative: Cayli, Hülya
Paragon Consultancy Inc.
Koza Sokak No: 63/2
GOP
06540 Ankara (TR)

(54) **Halo reducing motion-compensated interpolation**

(57) Embodiments provide a method, device, program or system for motion-compensated interpolation, comprising detecting cover and/or uncover regions, assigning motion vectors on cover and/or uncover regions, generating a forward (or backward) motion estimation, and processing the provided forward (or backward) estimation to generate a backward (or forward) motion estimation. The processing may comprise negating, and optionally smoothing, the provided forward (or backward) estimation to generate the backward (or forward) motion estimation

EP 2 237 560 A1

Figure – 1

## Description

### Field of the Invention

Embodiments of the present invention provide a cover-uncover region detection and motion estimation for regions in motion containing videos. The term video is to be understood here in a general sense encompassing video, multimedia films, streaming, movies, clips, digital or analog image or picture presentation, etc.

In motion compensated interpolation (MCI) schemes, a common problem is the so-called halo effect around the moving object boundaries. This halo effect is caused by the covered and uncovered regions between two successive frames used for interpolation. Covering and uncovering are caused by the speed difference between the foreground and background objects. In motion compensated, MC, interpolation schemes, covered regions exist e.g. only in the previous frame and uncovered regions only in the next frame and therefore no block matching can be reliably established for such regions, and their motion vectors need to be calculated differently in order to minimize the halo effect.

Another cause of the halo effect is the block size used in motion estimation. Motion vectors are calculated on block basis rather than pixel basis, resulting in a much lower motion vector resolution than the pixel resolution. If a part of foreground and background objects fall into the same block as in the boundaries, they are assigned the same motion vector which is actually not correct. Some schemes such as described in US 7,058,227 try to overcome this problem by using smaller blocks at the boundaries.

There have been various attempts to reduce the halo effect in motion compensated interpolation, MCI. A first step is generally to localize the covered and uncovered areas (US 6,219,436, US 6,771,799, US 7,058,227, US 6,487,313, WO 2007/119183). Once the problem areas are determined, the motion vectors in these areas are determined using different methods. After all motion vectors including those of the covered/uncovered areas are determined, usual frame interpolation is done.

Covered/uncovered areas may be determined using motion vector field discontinuities. Large discontinuities, edges, in motion vector fields represent the covered/uncovered areas. For this reason, a true motion vector field should be established before problem area detection. Although true motion estimation has not yet been perfectly accomplished, there are approximates such as a 3D recursive search in: G. de Haan, P.W.A.C Biezen, H. Huijgen, and O.A. Ojo, 'True Motion Estimation with 3-D Recursive Search Block-Matching', IEEE Tr. on Circuits and Systems for Video Technology, Vol. 3, October 1993, pp. 368-388. Another method establishing a less reliable true motion vector field is using a usual block matching followed by vector smoothing. An increase in reliability for this method may be achieved if vectors of forward motion estimation, FME, from the previous frame to the next are used together with the vectors of backward motion estimation, BME, from the next frame to the previous frame as disclosed in US 6,005,639. However, providing two separate motion estimations, using forward and backward motion estimation to construct two motion vector fields, requires high computational effort.

### Summary

Embodiments of devices and methods in accordance with the invention aim at providing at least one of a reliable cover-uncover region detection and motion estimation for applying halo reduction algorithms efficiently.

At least one, or optionally all, of the embodiments of the invention provide high reliability of true motion vectors in cover/uncover detection. For that purpose two separate motion estimations may be used, forward motion estimation, FME, and backward motion estimation, BME. The motion vectors on the cover/uncover regions are assigned correctly so as to prevent halo effect.

At least one, more, or optionally all, of the embodiments of the present invention use both FME and BME to get a more truthful motion vector field and hence more efficient detection of cover/uncover regions.

In making or providing backward motion estimation, BME, one or more embodiments of the invention use or process one or more forward motion estimations, e.g. by negation and smoothing of forward motion estimation or estimates, FME, vectors, to reduce computations.

In addition, one or more embodiments of the present invention use a candidate set to determine the motion vectors on the cover/uncover regions.

One or more, or optionally all, of the embodiments such as a method aim at reducing halo artifacts in the output of motion-compensated interpolation.

In accordance with one or more embodiments, a method is provided as defined in claim 1 or any one of the dependent method claims.

Further, an apparatus or device is provided as defined in claim 10 or any one of the dependent device claims.

In addition, a computer program or software or computer program is defined in claim 15. The program or program product may e.g. be provided or stored or storable on a computer readable storage medium.

Further features, aspects and advantages of embodiments of the invention will become apparent from the following detailed description of embodiments with reference to the drawings.

**Brief Description of the Drawings**

Fig. 1 shows a device or system of a halo reduced motion-compensated interpolation for frame rate conversion in accordance with one or more embodiments according to the invention,

Fig. 2 illustrates schematic drawings of cover and uncover regions,

Fig. 3 shows motion estimates of forward directions for uncover regions,

Fig. 4 shows motion estimates of backward directions for cover regions, and

Fig. 5 illustrates an embodiment of a method in accordance with the invention.

**Detailed Description of Embodiments**

In accordance with one or more embodiments, a motion-compensated image interpolation method, device or system is utilized in frame rate conversion applications. For frame rate conversion applications the accuracy of the motion vector estimation plays an important role for synthesizing natural, artifact free interpolated frames. The performance of two frame based motion estimation algorithms may degrade at the moving object boundaries (motion boundaries) according to the occlusion phenomena. A reference search unit, which may generally be a rectangle shaped block, is covered or uncovered in the next frame according to the direction of the motion.
A straightforward motion-compensated interpolation method applies a bidirectional interpolation like

$$I(x, t+0.5) = 0.5 * (I(x-d, t) + I(x+d, t+1)) \qquad (1)$$

Since the estimated motion vectors at the occlusion regions are unreliable, a bi-directional compensation method may mix the foreground and background objects intensities which causes a disturbing artifact called halo artifact.
In order to remove or reduce the halo artifact the occlusion regions may be detected and may be classified as cover or uncover regions in accordance with one or more embodiments according to the invention. Then the motion estimates of the occlusion regions may be updated with the background motion vector. The updated motion vectors may be compensated from the previous frame for cover and from the next frame for uncover regions.

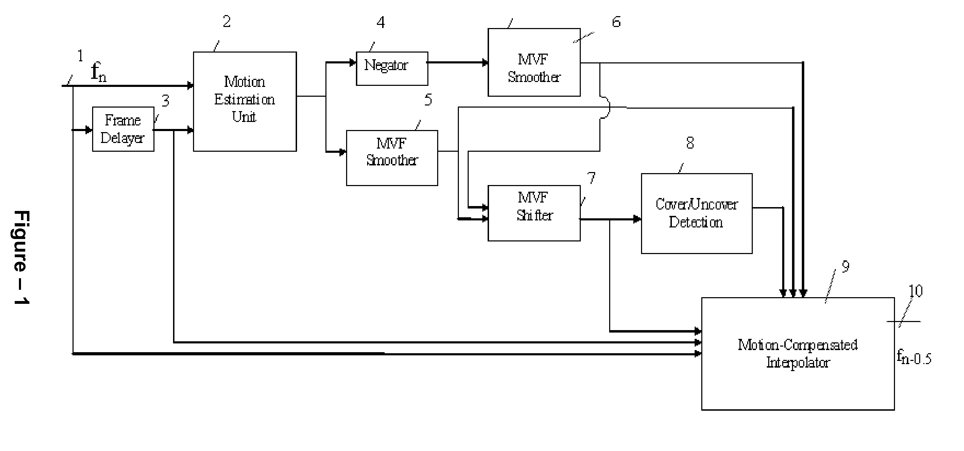

Fig. 1 shows an outline of a halo reduced motion-compensated interpolation for frame rate conversion in accordance with one or more embodiments according to the invention. A motion estimation unit, MEU, (2) or a respective motion estimation function, receives via an input (1) consecutive frames $f_n$, n representing natural numbers from 1 to any arbitrary value. The motion estimation unit or function (2) makes a motion estimation from a previous frame $f_n$ to a next frame, e.g. $f_{n+1}$, which will be called forward motion estimate or estimates, FME. Input (1) is directly connected to an input of the motion estimation unit (2) and further to a frame delayer (3) or frame delay function, and a motion compensated interpolator (9) or motion compensated interpolation function. The frame delayer (3) or delay function delays an input frame by a defined time such as one frame. The output of the frame delayer (3) is connected to the motion estimation unit (2) and to the motion compensated interpolator (9).
Any motion estimation algorithm can be used in the motion estimation unit (2) or function. In this embodiment, a full block search method is utilized which minimizes the sum of absolute differences, SAD, metric given as

$$\sum_{x \in B} |I(x, t) - I(x+d, t+1)| \qquad (2)$$

The acquired motion vector field, MVF, from the motion estimation unit, MEU, (2) can diverge from the real motion content in order to minimize an intensity based matching criteria like Sum of Absolute Differences (SAD). In order to remove the intensity based matching outliers in the motion vector field, MVF, a MVF smoothing unit (SU) or smoother (5) or smoothing function is concatenated to the output of the motion estimation unit (2) as shown in Figure 1. The smoothing unit (5) updates a motion vector, MV, of each block from a MV candidate set containing the motion vector estimates of the current and its e.g. eight neighbouring blocks.

Among the MV candidate set, C, a motion vector, MV, minimizing a cost function

$$\left| I(x,t) - I(x+d_i, t+1) \right| \sum_{\substack{d_j \in C \\ d_i \neq d_j}} \left| d_i - d_j \right| \tag{3}$$

is assigned to current block.

The output of the motion estimation unit (2) is also reversed by a negation unit, NU, or negator (4) or negation function, and fed to another motion vector field smoothing unit, SU, or smoother (6) or smoothing function for acquiring motion estimates of backward motion estimates, BME, from next frame to current frame. In this embodiment, the negation unit, NU, (4) or negation function just multiplies the motion vectors with -1. The reversed motion vector field, MVF, provides a good estimate for the BME except at the occlusion regions. The BME of the uncover regions can not be estimated accurately since those regions do not exist in the previous frame to be matched. The FME of cover regions are expected to be unreliable since their match disappear in the next frame, hence their negation will be also unreliable. However in most cases the BME of cover regions can be estimated accurately since those regions in next frame can be matched correctly in the previous frame. In order to correctly recover these regions another smoothing unit, SU, (6) or smoothing function is concatenated to the negated MVF. The next and previous frames are swapped in equation 3 like

$$\left| I(x,t+1) - I(x+d_i, t) \right| \sum_{\substack{d_j \in C \\ d_i \neq d_j}} \left| d_i - d_j \right| \tag{4}$$

to make the next frame as reference for the BME. The smoothing unit, SU, (6) updates the BME of the cover regions correctly from the neighbouring MVs in the candidate set. Utilizing a negator (4) or negating or inverting function and a smoothing unit, SU, (6) or smoothing function for acquiring the BME is advantageous and computationally much more efficient than acquiring BME by utilizing another motion estimation unit or motion estimator and smoother. In other embodiments of the invention the BME may also be acquired in other ways such as utilizing another or motion estimator or function and smoother, etc.

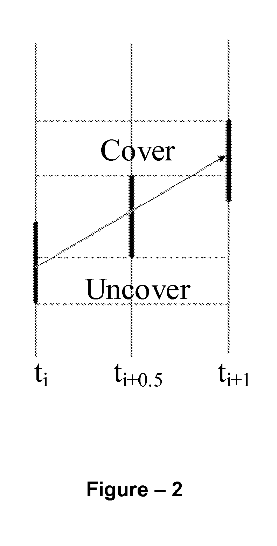

Schematic drawings of cover and uncover regions are shown in Fig. 2.

In order to make a bidirectional interpolation for the motion-compensated frames, the FME and BME are transformed to bidirectional motion estimates, BiME, by a motion vector field shifting unit, MVFSU, or MVF shifter (7). The MVFSU (7) shifts the FME and BME received from MVF smoothers (5) and (6) respectively, to a desired fraction of their trajectories. This fraction may be determined by the desired temporal location of the motion-compensated interpolated frame. For doubling the frame rate, this fraction is just half of the motion vector trajectories, or more generally, the inverse of the frame rate increase factor. Keeping the block grid of the frame fixed, the shifted vectors become bidirectional motion candidates for the blocks they stay in.

Since the motion trajectories of the FME and BME may cross some blocks that may contain more than one bidirectional motion vector candidate, among these candidates the one providing minimum bidirectional SAD is assigned as the BiME of the block. Using all candidate motion vectors during the motion-compensated bidirectional interpolation is also possible by weighting the synthesis blocks of the candidate vectors according to their SAD matching metric. Beside the blocks containing multiple motion vector candidates, some blocks may be left with no candidate since no trajectory passes over them. For this kind of blocks the assigned bidirectional motion vectors of the neighbouring blocks are used as bidirectional motion vector candidates. For the bidirectional motion vector candidates the SAD metric to be minimized is

$$\sum_{x \in B} \left| I(x - \alpha d, t) - I(x + (1-\alpha)d, t+1) \right| \tag{5}$$

which is similar to equation 2 but slightly differing by taking the frame to be interpolated as the reference of the motion compensation. The variable $\alpha$ is the temporal fraction of the frame to be motion-compensated and gets values between 0 and 1.

A cover/uncover detection unit, CUDU, (8) detects and classifies the occlusion regions as cover and uncover based on the orientation of the motion vectors with respect to their neighbours. In order to find the occlusion regions the discontinuities in the MVF may be utilized since they generally coincide with the object boundaries. However the MVF at the cover and uncover regions are not reliable since they can not be matched correctly with bidirectional compensation. Hence the difference between the neighbouring blocks in horizontal direction is more reliable to detect the discontinuities in the MVF. Since the motion contents of videos are in general in the horizontal direction it is reasonable to check the discontinuities in the horizontal direction. However vertical direction can also be added to the detection procedure. In accordance with one or more embodiments according to the invention, the occlusion detection and cover/uncover classification is done by the rule given below

$$d_{diff} = d_{bi}(x + \lambda b, y) - d_{bi}(x - \lambda b, y)$$

$$\text{If } d_{diff,x} < 0 \text{ and } \left| d_{diff,x} \right| > T_{occ} \rightarrow \text{ Cover}$$

$$\text{If } d_{diff,x} > 0 \text{ and } \left| d_{diff,x} \right| > T_{occ} \rightarrow \text{ Uncover}$$

where $\lambda$ is a scaling coefficient, $T_{occ}$ is a threshold for discontinuity in the MVF and b is the block size used in MEU (2).

By this rule the blocks located at the border of the MVF discontinuities which are occlusion candidates are classified as cover and uncover according to orientations of the neighbouring motion vectors along the horizontal direction. It is important to get reliable neighbouring motion vectors for cover/uncover classification. Hence it is desirable that the motion vectors to be compared are located far away from the object boundaries. By setting the $\lambda$ coefficient to higher values e.g. above 1, for example between 1 and 5, or between 1,5 and 3, or to1,5 or 2, the location of the motion vectors to be compared can be made distant to object boundaries. By this rule the blocks with high bidirectional SAD match which are occlusion candidates are classified as cover and uncover according to orientations of the neighbouring motion vectors along the global motion direction.

The motion-compensated interpolation unit, MCIU, or interpolator (9) receives the input signal applied to the input (1) and the output signals of the units, blocks or functions (3, 5, 6, 7, 8). At an output (10), the interpolator (9) outputs a motion compensated interpolated output such as f$_{n-0,5}$. The interpolator (9) makes a bidirectional interpolation as given in equation 1.

However for the cover and uncover assigned blocks the interpolator MCIU (9) updates the motion vector estimates of the blocks from the FME and BME according to their cover/uncover assignment and makes one directional interpolation.

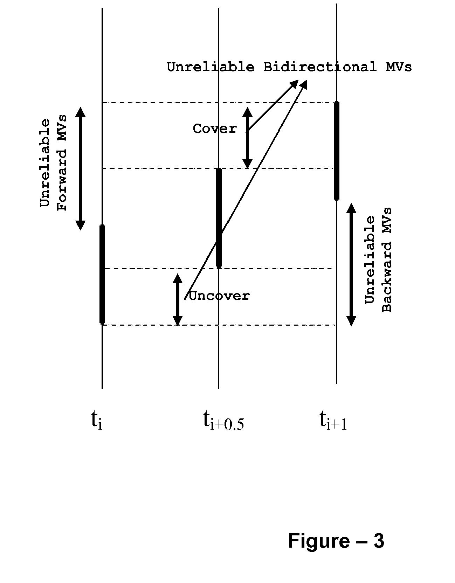

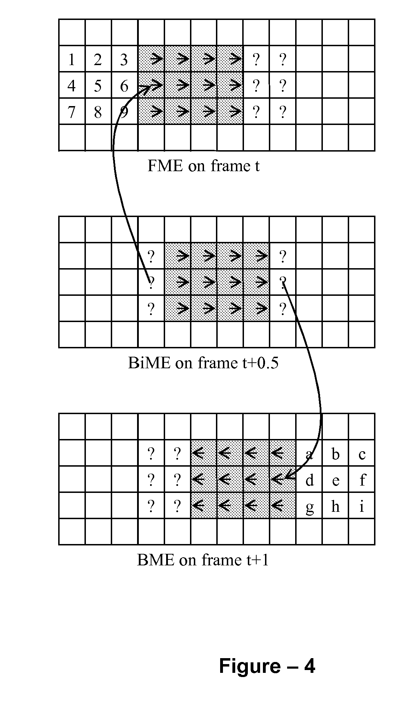

There is no SAD like matching criteria for updating the motion vectors of the cover/uncover regions since those regions only exist in one of the frames. However the differences between the forward and backward matching errors can give an idea about which motion vector should represent the foreground motion. In Fig. 3 and in Fig. 4 the unreliable regions for the motion estimates of the forward and backward directions are shown with "?". For the uncover regions it is expected to get reliable matching in forward direction as shown in Fig. 3, and for cover regions it is expected to get reliable matching in backward direction which are shown in Fig. 4. And additionally the motion vectors which give reliable matching at occlusion regions in forward or backward direction may represent the foreground motion. Hence in order to update the motion vectors of occlusion regions with the background motion for one directional motion-compensation, the background motion estimates can be located at the reverse direction of the foreground motion for cover and uncover regions. For this reason the motion vectors of uncover regions are updated with a reliable backward motion vector from a candidate set located at the reverse direction of the foreground motion vector which is a FME of the uncover region having a small forward matching error.

Similarly, the motion vectors of cover regions are updated with a reliable forward motion vector from a candidate set located at the reverse direction of the foreground motion vector which is a BME of the cover region having a small backward matching error. The locations of the candidate sets for the cover and uncover regions are shown in Figure 4. From the candidate set the update vector can be acquired by a median filtering among the reliable motion vectors, which have small matching error. In case no motion vector candidate can be acquired since there is no reliable foreground motion estimate or there is no reliable candidate for the background motion, no update is done for the motion vector of the occlusion region. After the motion vector update step the one directional interpolation is done for the occlusion regions. For the uncover regions motion compensation is done from the next frame and for the cover regions motion compensation is done from previous frame.

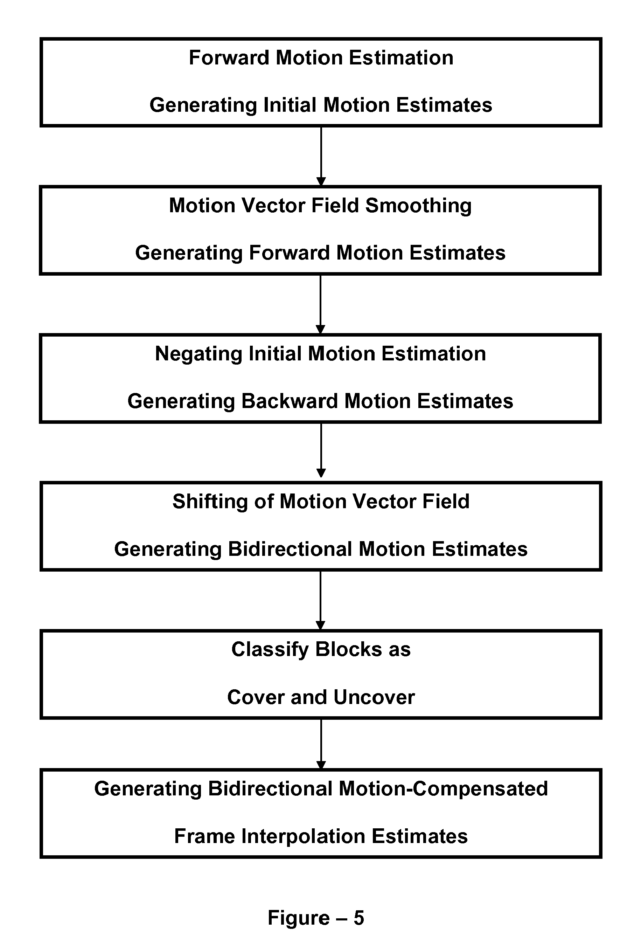

A method in accordance with one or more embodiments according to the invention is shown in Fig. 5.

In a step S1 shown in Fig. 5, a forward motion estimation between previous and next frames of the video stream is performed. A block based full search motion estimation may be done at this step. The output of step S1 is called Initial Motion Estimates (IME).

In step S2, a motion vector field smoothing is done to get a more reliable true motion estimate.

$$\text{The term } \left| I(x,t) - I(x+d_i, t+1) \right| \sum_{\substack{d_j \in C \\ d_i \neq d_j}} \left| d_i - d_j \right|$$

is minimized for each block during the smoothing operation where C is a candidate motion vector set composed of motion vectors of 8 neighbouring blocks and the block itself. The output of this step is called forward motion estimates (FME, $d_{fw}$).

Step S3: In order to get backward motion estimates, negate (e.g. just multiply by -1) the IME generated a step S1, and make a motion vector field smoothing similar to the smoothing of step S2. The output of step S3 is called backward motion estimates (BME, $d_{bw}$).

Step S4: In order to get Bidirectional Motion Estimates, shift the motion vector field to the temporal location of the desired frame to be interpolated. Shifting operation is done by following the trajectories of the motion vectors, FME and BME. For the blocks that contains multiple trajectories of motion vectors the one which has the least bidirectional matching criteria is assigned. For the blocks that contain no trajectory among the neighbouring motion vectors the one which has the least bidirectional matching criteria is assigned. The output of this step S4 is called Bidirectional Motion Estimates (BiME, $d_{bi}$).

Step S5: Classify the blocks as cover and uncover which satisfy the following equations.

$$d_{diff} = d_{bi}(x + \lambda b, y) - d_{bi}(x - \lambda b, y)$$

$$\text{If } d_{diff,x} < 0 \text{ and } \left| d_{diff,x} \right| > T_{occ} \rightarrow \text{ Cover}$$

$$\text{If } d_{diff,x} > 0 \text{ and } \left| d_{diff,x} \right| > T_{occ} \rightarrow \text{ Uncover}$$

Step S6: Make a bidirectional motion-compensated frame interpolation for each block. If the block is neither assigned as cover nor uncover then

·

$$I(x, t+0.5) = 0.5 * (I(x - d_{bi}, t) + I(x + d_{bi}, t+1))$$

else if the block is assigned as cover

·   If the SAD error of BME, $d_{bw}$, is under a defined threshold, $T_{rel}$, update $d'_{bi} \leftarrow d_c$

where $d_c$ is derived among the motion vector candidate set consist of motion vectors of 8 neighbouring and the current block of the BME located at the reverse direction of the $d_{bw}$. $d_c$ is the motion vector having the least backward matching error or median filtering of the candidate set after eliminating the unreliable motion vectors with SAD tresholding. After the update step, whether the bidirectional motion vector of the cover region is changed or not make one directional motion compensated interpolation

$$I(x,t+0.5) = I(x - d'_{bi}, t)$$

else which means the block is assigned as uncover

- If the SAD error of FME, $d_{fw}$, is under a defined threshold, $T_{rel}$, update $d'_{bi} \leftarrow d_c$

where $d_c$ is derived among the motion vector candidate set consist of motion vectors of 8 neighbouring and the current block of the FME located at the reverse direction of the $d_{fw}$. $d_c$ is the motion vector having the least forward matching error or median filtering of the candidate set after eliminating the unreliable motion vectors with SAD tresholding. After the update step, whether the bidirectional motion vector of the cover region is changed or not make one directional motion compensated interpolation

$$I(x,t+0.5) = I(x + d'_{bi}, t+1).$$

In the above embodiment, the backward motion estimate is calculated base on the forward motion estimate. The process may also be carried out in a different or reversed manner by starting with a calculation of a backward motion estimate and then providing a forward motion estimate e.g. by negating and smoothing the backward motion estimate.
The device shown in Fig. 1 may also be implemented in a different manner such as a distributed system or as an apparatus or part of a device or apparatus such as a controller or processor.
Any of the unit, steps, features or functions mentioned above may be implemented as hardware structures or in form of a software implementations such as computer implementable programs or routines or a computer program product. Such a computer program may e.g. be stored on a computer-readable storage medium or in any other form. Further, embodiments of the invention my include only one of the above mentioned units, steps, features or functions, or more or all of the above mentioned units, steps, features or functions in any arbitrary combinations.

**Claims**

1. Method for motion-compensated interpolation, comprising:

    detecting cover and/or uncover regions,
    assigning motion vectors on cover and/or uncover regions,
    generating one of a forward and backward motion estimation,
    processing the provided forward or backward estimation to generate the other one of forward and backward motion estimation.

2. Method according to claim 1, wherein said processing comprises negating, and optionally smoothing, the provided forward or backward estimation to generate the other one of forward and backward motion estimation.

3. Method according to claim 1 or 2, comprising generating a candidate set and using the candidate set to determine the motion vectors on the cover and/or uncover regions.

4. Method according to claim 1, 2 or 3, comprising at least one, more or all of:

    reducing halo artifacts in the output of the motion-compensated interpolation,
    utilizing the method in frame rate conversion application,
    applying a bidirectional interpolation,
    detecting and classifying occlusion regions as cover or uncover regions,
    updating motion estimates of the occlusion regions with a background motion vector,
    compensating the updated motion vectors from a previous frame for cover and from a next frame for uncover regions,
    providing a forward motion estimation from a previous frame to a next frame,
    delaying an input frame by a defined time,
    utilizing a full block search method,

minimizing a sum of absolute differences,

smoothing an output of the motion estimation,

updating a motion vector of each block from a motion vector candidate set containing the motion vector estimates of the current and neighbouring blocks,

reversing or negating an output of the motion estimation,

smoothing the reversed or negated motion estimation for acquiring one or more backward motion estimates from next frame to current frame,

updating the backward motion estimates of cover regions from neighbouring motion vectors in a candidate set.

5. Method according to any one of the preceding claims, comprising at least one, more or all of:

transforming forward motion estimates and backward motion estimates to bidirectional motion estimates in order to make a bidirectional interpolation for motion-compensated frames,

shifting smoothed forward and backward motion estimates to a desired fraction of their trajectories,

keeping a block grid of the frame fixed so that the shifted vectors become bidirectional motion candidates for the blocks they stay in.

6. Method according to any one of the preceding claims, comprising at least one, more or all of:

using all candidate motion vectors during a motion-compensated bidirectional interpolation,

weighting the blocks of candidate vectors,

in case a block does not include a motion vector candidate, assigning bidirectional motion vectors of neighbouring blocks as bidirectional motion vector candidates,

classifying one or more blocks located at a border of motion vector field discontinuities as cover and uncover according to orientations of the neighbouring motion vectors along a direction, optionally the horizontal direction,

comparing, for cover/uncover classification, motion vectors located remote from object boundaries,

for cover and uncover assigned blocks, an interpolator or interpolation function updates the motion vector estimates of the blocks from the forward and backward motion estimates according to their cover/uncover assignment and makes one directional interpolation.

7. Method according to any one of the preceding claims, comprising at least one, more or all of:

motion vectors of uncover regions are updated with a backward motion vector from a candidate set located at the reverse direction of a foreground motion vector or forward motion estimate of the uncover region,

motion vectors of cover regions are updated with a forward motion vector from a candidate set located at the reverse direction of the background motion vector or backward motion estimate of the cover region,

acquiring from a candidate set an update vector by a median filtering among motion vectors.

8. Method according to any one of the preceding claims, comprising at least one, more or all of:

a forward motion estimation between previous and next frames of a video stream, a motion vector field smoothing to get a motion estimate,

minimizing an equation for each block during the smoothing operation so as to provide forward motion estimates,

providing backward motion estimates by negating an initial motion estimate and smoothing a motion vector field,

generating bidirectional motion estimates by shifting a motion vector field to the temporal location of a desired frame to be interpolated.

9. Method according to any one of the preceding claims, comprising at least one, more or all of:

classification of blocks as cover and uncover which satisfy the following equations:

$$d_{diff} = d_{bi}(x + \lambda b, y) - d_{bi}(x - \lambda b, y)$$

$$\text{If } d_{diff,x} < 0 \quad \text{and} \quad \left| d_{diff,x} \right| > T_{occ} \rightarrow \quad \text{cover}$$

$$\text{If } d_{diff,x} > 0 \quad \text{and} \quad \left| d_{diff,x} \right| > T_{occ} \rightarrow \quad \text{uncover},$$

performing a bidirectional motion-compensated frame interpolation for one, more or each block,
if the block is neither assigned as cover nor uncover then

$$I(x, t + 0.5) = 0.5 * (I(x - d_{bi}, t) + I(x + d_{bi}, t + 1))$$

else if the block is assigned as cover,
if a sum of absolute differences (SAD) error of backward motion estimates, $d_{bw}$, is under a defined threshold ($T_{rel}$) update $d'_{bi} \leftarrow d_c$ where $d_c$ is a motion vector having a least backward matching error or median filtering of the candidate set optionally after eliminating unreliable motion vectors with SAD tresholding,
after the update step a one directional motion compensated interpolation is carried out:

$$I(x, t + 0.5) = I(x - d'_{bi}, t)$$

else if the block is assigned as uncover

if the SAD error of FME, $d_{fw}$, is under a defined threshold, $T_{rel}$, update $d'_{bi} \leftarrow d_c$ where $d_c$ is derived among the motion vector candidate set consist of motion vectors of 8 neighbouring and the current block of the FME located at the reverse direction of the $d_{fw}$, and $d_c$ is a motion vector having the least forward matching error or median filtering of the candidate set, optionally after eliminating unreliable motion vectors with SAD tresholding, after the update step, a one directional motion compensated interpolation is carried out:

$$I(x, t + 0.5) = I(x + d'_{bi}, t + 1)$$

10. Device for motion-compensated interpolation, comprising:

means for detecting cover and/or uncover regions,
means for assigning motion vectors on cover and/or uncover regions,
means for generating one of a forward and backward motion estimation,
means for processing the provided forward or backward estimation to generate the other one of forward and backward motion estimation.

11. Device according to claim 10, wherein said processing means comprises means for negating, and optionally smoothing, the provided forward or backward estimation to generate the other one of forward and backward motion estimation.

12. Device according to claim 10 or 11, comprising means for generating a candidate set and using the candidate set to determine the motion vectors on the cover and/or uncover regions.

13. Device according to claim 10, 11 or 12, comprising means for at least one, more or all of:

reducing halo artifacts in the output of the motion-compensated interpolation, utilizing the method in frame rate conversion application,

applying a bidirectional interpolation,

detecting and classifying occlusion regions as cover or uncover regions,

updating motion estimates of the occlusion regions with a background motion vector, compensating the updated motion vectors from a previous frame for cover and from a next frame for uncover regions,

providing a forward motion estimation from a previous frame to a next frame, delaying an input frame by a defined time,

utilizing a full block search method,

minimizing a sum of absolute differences,

smoothing an output of the motion estimation,

updating a motion vector of each block from a motion vector candidate set containing the motion vector estimates of the current and neighbouring blocks,

reversing or negating an output of the motion estimation,

smoothing the reversed or negated motion estimation for acquiring one or more backward motion estimates from next frame to current frame,

updating the backward motion estimates of cover regions from neighbouring motion vectors in a candidate set.

**14.** Device according to claim 10, 11, 12, or 13, comprising means for at least one, more or all of:

transforming forward motion estimates and backward motion estimates to bidirectional motion estimates in order to make a bidirectional interpolation for motion-compensated frames,

shifting smoothed forward and backward motion estimates to a desired fraction of their trajectories,

keeping a block grid of the frame fixed so that the shifted vectors become bidirectional motion candidates for the blocks they stay in,

using all candidate motion vectors during a motion-compensated bidirectional interpolation,

weighting the blocks of candidate vectors,

in case a block does not include a motion vector candidate, assigning bidirectional motion vectors of neighbouring blocks as bidirectional motion vector candidates,

classifying one or more blocks located at a border of motion vector field discontinuities as cover and uncover according to orientations of the neighbouring motion vectors along a direction, optionally the horizontal direction,

comparing, for cover/uncover classification, motion vectors located remote from object boundaries,

for cover and uncover assigned blocks, an interpolator or interpolation function updates the motion vector estimates of the blocks from the forward and backward motion estimates according to their cover/uncover assignment and makes one directional interpolation,

updating motion vectors of uncover regions with a backward motion vector from a candidate set located at the reverse direction of a foreground motion vector or forward motion estimate of the uncover region,

updating motion vectors of cover regions with a forward motion vector from a candidate set located at the reverse direction of the background motion vector or backward motion estimate of the cover region,

acquiring from a candidate set an update vector by a median filtering among motion vectors,

a forward motion estimation between previous and next frames of a video stream, a motion vector field smoothing to get a motion estimate,

minimizing an equation for each block during the smoothing operation so as to provide forward motion estimates,

providing backward motion estimates by negating an initial motion estimate and smoothing a motion vector field,

generating bidirectional motion estimates by shifting a motion vector field to the temporal location of a desired frame to be interpolated,

classify blocks as cover and uncover which satisfy the following equations.

$$d_{diff} = d_{bi}(x + \lambda b, y) - d_{bi}(x - \lambda b, y)$$

$$\text{If } d_{diff,x} < 0 \text{ and } \left| d_{diff,x} \right| > T_{occ} \rightarrow \text{ cover}$$

$$\text{If } d_{diff,x} > 0 \text{ and } \left| d_{diff,x} \right| > T_{occ} \rightarrow \text{uncover,}$$

performing a bidirectional motion-compensated frame interpolation for one, more or each block,
if the block is neither assigned as cover nor uncover then

$$I(x,t+0.5)=0.5*(I(x-d_{bi},t)+I(x+d_{bi},t+1))$$

else if the block is assigned as cover,

if a sum of absolute differences, SAD, error of backward motion estimates, $d_{bw}$, is under a defined threshold, $T_{rel}$, update $d'_{bi} \leftarrow d_c$ where $d_c$ is a motion vector having a least backward matching error or median filtering of the candidate set optionally after eliminating unreliable motion vectors with SAD tresholding,
after the update step a one directional motion compensated interpolation is carried out:

$$I(x,t+0.5)=I(x-d'_{bi},t)$$

else if the block is assigned as uncover

if the SAD error of FME, $d_{fw}$, is under a defined threshold, $T_{rel}$, update $d'_{bi} \leftarrow d_c$ where $d_c$ is derived among the motion vector candidate set consist of motion vectors of 8 neighbouring and the current block of the FME located at the reverse direction of the $d_{fw}$, and $d_c$ is a motion vector having the least forward matching error or median filtering of the candidate set, optionally after eliminating unreliable motion vectors with SAD tresholding,
after the update step, a one directional motion compensated interpolation is carried out:

$$I(x,t+0.5)=I(x+d'_{bi},t+1)$$

15. A computer program product, comprising code portions for carrying out one, more, or all of the steps or functions defined in any one of claims 1 to 9.

Figure – 1

Figure – 2

**Figure – 3**

FME on frame t

BiME on frame t+0.5

BME on frame t+1

**Figure – 4**

| Forward Motion Estimation<br><br>Generating Initial Motion Estimates |
| :---: |

| Motion Vector Field Smoothing<br><br>Generating Forward Motion Estimates |
| :---: |

| Negating Initial Motion Estimation<br><br>Generating Backward Motion Estimates |
| :---: |

| Shifting of Motion Vector Field<br><br>Generating Bidirectional Motion Estimates |
| :---: |

| Classify Blocks as<br><br>Cover and Uncover |
| :---: |

| Generating Bidirectional Motion-Compensated<br><br>Frame Interpolation Estimates |
| :---: |

Figure – 5

## EUROPEAN SEARCH REPORT

**Application Number**

EP 10 15 6800

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 1 855 474 A1 (SONY DEUTSCHLAND GMBH [DE]) 14 November 2007 (2007-11-14)<br>* paragraphs [0002] - [0014], [0 21] - [0022], [0 42] - [0051], [0 53] - [0068], [0071] *<br>----- | 1-5,7,8,<br>10-13,15<br>6,9,14 | INV.<br>H04N7/26<br>H04N7/46<br>H04N7/01 |
| Y<br><br><br><br><br><br><br><br><br>A | JEON B-W ET AL: "COARSE-TO-FINE FRAME INTERPOLATION FOR FRAME RATE UP-CONVERSION USING PYRAMID STRUCTURE"<br>IEEE TRANSACTIONS ON CONSUMER ELECTRONICS, IEEE SERVICE CENTER, NEW YORK, NY, US LNKD- DOI:10.1109/TCE.2003.1233761, vol. 49, no. 3, 1 August 2003 (2003-08-01) , pages 499-508, XP001172089 ISSN: 0098-3063<br>* page 501, left-hand column, lines 7-11 *<br>* page 502, right-hand column, line 34 - page 503, right-hand column, line 19 *<br>----- | 6,14<br><br><br><br><br><br><br><br><br>1-5,<br>7-13,15 | |
| Y<br><br>A | US 7 058 227 B2 (DE HAAN GERARD [NL] ET AL) 6 June 2006 (2006-06-06)<br>* column 3, line 1 - column 6, line 62 *<br>----- | 9,14<br><br>1-8,<br>10-13,15 | |
| A | WO 2004/066624 A1 (KONINKL PHILIPS ELECTRONICS NV [NL]; WITTEBROOD RIMMERT B [NL]; DE HAA) 5 August 2004 (2004-08-05)<br>* page 6, line 14 - page 11, line 20 *<br>----- | 1-15 | |
| A | US 2003/185304 A1 (AUYEUNG CHEUNG [US]) 2 October 2003 (2003-10-02)<br><br>* paragraphs [0016], [0 37] - [0039], [0 43] *<br>----- | 1,2,4,8,<br>10,11,<br>13-15 | |

**TECHNICAL FIELDS SEARCHED (IPC)**

H04N

The present search report has been drawn up for all claims

| Place of search | Date of completion of the search | Examiner |
|---|---|---|
| Berlin | 19 July 2010 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 15 6800

This annex lists the patent family members relating to the patent documents cited in  the above-mentioned European search report.
The members are as contained in the European Patent Office EDP file on
The European Patent Office is in no way liable for these particulars which are merely given for the purpose of information.

19-07-2010

| Patent document cited in search report | | Publication date | Patent family member(s) | | Publication date |
|---|---|---|---|---|---|
| EP 1855474 | A1 | 14-11-2007 | CN | 101444094 A | 27-05-2009 |
| | | | WO | 2007131688 A1 | 22-11-2007 |
| | | | US | 2009278991 A1 | 12-11-2009 |
| US 7058227 | B2 | 06-06-2006 | US | 2002186889 A1 | 12-12-2002 |
| WO 2004066624 | A1 | 05-08-2004 | AU | 2003285682 A1 | 13-08-2004 |
| | | | CN | 1742486 A | 01-03-2006 |
| | | | EP | 1590957 A1 | 02-11-2005 |
| | | | JP | 2006513661 T | 20-04-2006 |
| | | | KR | 20050089886 A | 08-09-2005 |
| | | | US | 2006072790 A1 | 06-04-2006 |
| US 2003185304 | A1 | 02-10-2003 | AU | 2003210532 A1 | 20-10-2003 |
| | | | CN | 1656704 A | 17-08-2005 |
| | | | DE | 10392466 T5 | 24-02-2005 |
| | | | EP | 1490982 A2 | 29-12-2004 |
| | | | GB | 2402834 A | 15-12-2004 |
| | | | JP | 4394958 B2 | 06-01-2010 |
| | | | JP | 2005521977 T | 21-07-2005 |
| | | | WO | 03085990 A2 | 16-10-2003 |

EPO FORM P0459

For more details about this annex : see Official Journal of the European Patent Office, No. 12/82

**EP 2 237 560 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7058227 B
- US 6219436 B
- US 6771799 B
- US 6487313 B
- WO 2007119183 A
- US 6005639 A

**Non-patent literature cited in the description**

- **G. de Haan ; P.W.A.C Biezen ; H. Huijgen ; O.A. Ojo.** True Motion Estimation with 3-D Recursive Search Block-Matching. *IEEE Tr. on Circuits and Systems for Video Technology,* October 1993, vol. 3, 368-388